**Europäisches Patentamt**

**European Patent Office**

**Office européen des brevets**

(11) Numéro de publication : **0 329 657 B1**

(12) # FASCICULE DE BREVET EUROPEEN

(45) Date de publication du fascicule du brevet :
**22.01.92 Bulletin 92/04**

(51) Int. Cl.⁵ : **G01C 13/00, B63B 22/04**

(21) Numéro de dépôt : **87905764.4**

(22) Date de dépôt : **10.09.87**

(86) Numéro de dépôt international :
**PCT/FR87/00350**

(87) Numéro de publication internationale :
**WO 88/02101 24.03.88 Gazette 88/07**

(54) **DISPOSITIF POUR L'ETUDE ET LA MESURE DE LA HOULE.**

(30) Priorité : **11.09.86 FR 8612722**

(43) Date de publication de la demande :
**30.08.89 Bulletin 89/35**

(45) Mention de la délivrance du brevet :
**22.01.92 Bulletin 92/04**

(84) Etats contractants désignés :
**BE DE GB IT NL SE**

(56) Documents cités :
**FR-A- 2 041 708**
**US-A- 4 220 044**

(73) Titulaire : **ERDELY, Ladislas**
**35, rue Olivier-Metra**
**F-75020 Paris (FR)**
Titulaire : **BILLEREY, Marie-Laure Huguette**
**34, rue du Soleil**
**F-75020 Paris (FR)**

(72) Inventeur : **ERDELY, Ladislas**
**35, rue Olivier-Metra**
**F-75020 Paris (FR)**
Inventeur : **BILLEREY, Marie-Laure Huguette**
**34, rue du Soleil**
**F-75020 Paris (FR)**

(74) Mandataire : **Rataboul, Michel**
**Cabinet Michel Rataboul 69, rue de Richelieu**
**F-75002 Paris (FR)**

## Description

On sait que les phénomènes hydrauliques naturels sont généralement difficiles à étudier en raison même de la nature liquide de l'eau. Ces difficultés sont encore plus grandes lorsqu'il s'agit d'étudier la mer du fait de son immensité, de sa profondeur et de son agitation.

Lorsque l'on veut étudier, et à plus forte raison mesurer, les phénomènes de la mer, notamment la houle, on devrait agir à partir d'un point fixe, insensible aux mouvements de la mer : côte ou ilôt. En pratique c'est irréalisable et l'on agit généralement à partir d'un navire que l'on choisit pour être le moins instable possible et l'on essaye d'installer à bord les instruments d'étude et de mesure dans des conditions telles qu'ils soient à peu près insensibles aux mouvements inévitables du navire.

Parfois, il est impossible d'agir à partir d'un navire. C'est le cas de mesures nécessitant la présence d'un grand nombre de capteurs devant agir pendant de longues périodes de temps, comme par exemple l'étude de la direction de la houle.

Un dispositif adapté à la résolution de ce problème est décrit dans le document FR-A-2.041.708. Il consiste en un flotteur lesté et stabilisé de telle sorte qu'il s'incline en fonction de la direction de la houle. Mais il ne permet pas de mesurer l'intensité de la houle, par exemple, du fait de sa tendance à "pilonner", c'est-à-dire à s'enfoncer puis à se relever alternativement. Ceci constitue un défaut qui est acceptable quand le dispositif est associé à un appareil de mesure dont la position est indifférente par rapport au niveau de l'eau. Il est au contraire incompatible avec le fonctionnement correct d'appareils de mesure sensibles à la pression.

C'est précisément le problème que résout la présente invention qui propose une structure nouvelle grâce à laquelle le dispositif ne "pilonne" pas et peut donc recevoir tous les appareils de mesure souhaités, le dispositif pouvant se comporter très sensiblement comme un point fixe.

A cette fin l'invention a pour objet un dispositif pour l'étude et/ou la mesure de phénomènes hydrauliques en milieu non stable, notamment marin, du type comprenant une perche devant être plongée dans le milieu à étudier et munie d'une part d'un flotteur supérieur dont une partie doit rester immergée quel que soit l'état d'agitation du milieu et d'autre part d'un lest inférieur, perche qui est reliée à des moyens d'ancrage par un élément flexible tel qu'un câble, caractérisé en ce que sous le flotteur supérieur se trouve un ensemble qui comprend un boîtier extérieur de même forme et dimensions que la perche elle-même et un appareil de mesure intérieur, le tube étant percé de trous pour permettre à l'eau du milieu à étudier de parvenir jusqu'à l'appareil, le lest est surmonté d'un corps creux qui est équivalent en superficie extérieure à la partie du flotteur devant rester immergée et à l'ensemble, le corps creux étant percé de trous, la perche recevant au moins deux stabilisateurs latéraux superposés et situés de part et d'autre du centre de poussée du dispositif, l'ensemble étant prévu à un niveau où il reste immergé quel que soit le degré d'agitation du milieu étudié.

Selon d'autres caractéristiques de l'invention :
– chaque stabilisateur comprend au moins un aileron situé dans un plan perpendiculaire à l'axe de la perche;
– la perche comprend deux organes d'accrochage situés de part et d'autre du centre de poussée du dispositif et diamétralement opposés aux stabilisateurs, chacun de ces organes étant destiné à recevoir un élément flexible pour sa liaison avec des moyens d'ancrage;
– le lest est constitué par au moins un appareil de mesure placé dans un boîtier;
– le dispositif comporte un logement étanche muni d'un orifice obturable par lequel on peut introduire un lest fluide destiné à ajuster le niveau de flottaison du dispositif.

L'invention sera mieux comprise par la description détaillée ci-après faite en référence au dessin annexé. Bien entendu, la description et le dessin ne sont donnés qu'à titre d'exemple indicatif et non limitatif.

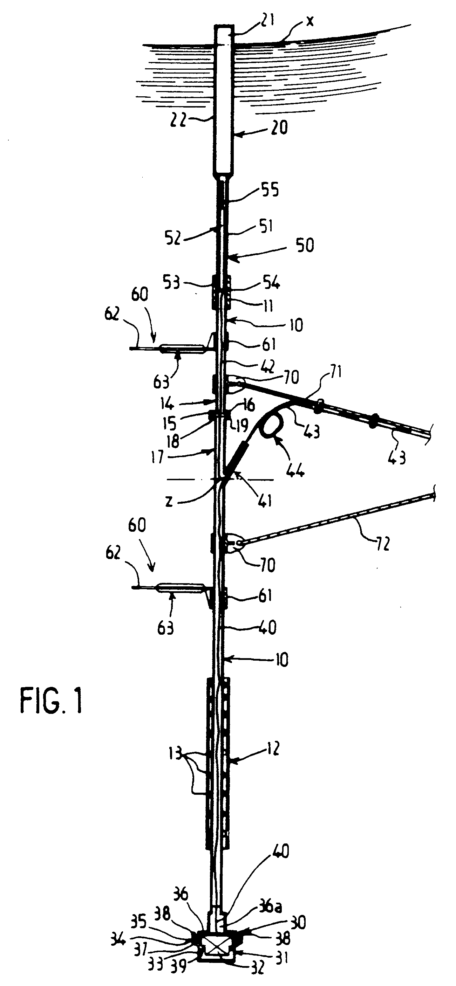

La figure 1 est une vue schématique du dispositif proprement dit conforme à l'invention, associé ici à deux appareils de mesure.

La figure 2 est une vue schématique du même dispositif installé sur un site d'utilisation.

En se reportant au dessin, on voit qu'un dispositif conforme à l'invention comprend une perche 10 munie d'un flotteur supérieur 20 et d'un lest inférieur 30. L'ensemble en ordre de marche est équilibré pour que le flotteur 20 émerge peu. Quand l'ensemble est plongé dans le milieu à étudier A supposé calme, l'eau de mer dans un endroit abrité en l'occurrence, la ligne de flottaison $\underline{x}$ se situe à quelques centimètres du sommet du flotteur 20. La partie émergée 21 est donc plus petite que la partie immergée 22.

Dans le document FR-A-2.041.708, on a prévu de donner au lest une forme extérieure identique à celle de la partie immergée 22 pour que l'effet d'un courant marin sur le dispositif soit également reparti sur sa partie haute et sur sa partie basse, ce qui empêche tout effet de couple tendant au basculement de la perche 10.

Ici, le lest 30 a une structure plus raffinée comprenant deux parties essentielles : un boîtier extérieur 31 comme enveloppe et un appareil de mesure intérieur 32 comme poids proprement dit. Il peut donc n'être pas possible d'adopter la solution de ce document antérieur et l'on explique plus loin comment la présente invention permet d'obtenir un équilibrage hydrodynamique efficace.

Avec cette structure, il faut pouvoir accéder à l'appareil 32 et cela est obtenu ici en prévoyant une cuve 33 dont le bord supérieur 34 vient en applique contre le bord inférieur 35 d'une cloche 36 formant couvercle et solidaire de la perche 10. Un joint d'étanchéité 37 est intercalé entre les bords 34 et 35 et le tout est serré par des goujons 38. L'appareil 32 repose sur un épaulement interne 39 et délivre des signaux à un câble de transmission électrique 40 aboutissant à un connecteur étanche 41 débouchant à l'extérieur.

Sous le flotteur supérieur 20, se trouve un ensemble 50 qui comprend un boîtier extérieur 51 de même forme et dimensions que la perche 10 elle-même et un appareil de mesure intérieur 52. Le boîtier ou tube 51 est soudé sous le flotteur 20 et pour pouvoir accéder à l'appareil 52, l'extrémité inférieure de ce boîtier est ouverte. Il présente un filetage extérieur 53 avec lequel doit coopérer une bague 54 à double taraudage permettant de relier le boîtier 51 à la perche proprement dite 10 elle-même munie d'un filetage 11.

Le tube 51 est percé de trous 55 pour permettre à l'eau du milieu à étudier A de parvenir jusqu'à l'appareil 52 car ici on prévoit que cet appareil est un pressiomètre destiné à mesurer la hauteur d'eau au-dessus du dispositif, c'est-à-dire l'amplitude de la houle, valeur que l'on déduit de la pression exercée sur l'appareil 52.

L'appareil 52 délivre des signaux à un câble de transmission électrique 42 aboutissant au connecteur étanche 41.

L'ensemble 30 formant lest doit être placé le plus bas possible, c'est-à-dire à l'extrémité inférieure de la perche 10 et cet endroit est propice à l'emplacement d'un appareil déterminant la direction de la houle, tel que celui qui est décrit dans le document FR-A-2.041.708.

En effet, un tel appareil est sensible aux inclinaisons du dispositif et l'angle de ces inclinaisons est constant le long de la perche 10, de sorte que l'appareil 32 peut être placé à n'importe quel endroit de la perche 10. Son emplacement à l'extrémité inférieure de la perche 10 n'a donc pas d'influence sur son fonctionnement mais, en revanche, procure un avantage particulier comme élément pondéreux constituant le lest.

L'ensemble 50 contenant un appareil 52 qui mesure la pression de l'eau, doit, au contraire, être placé le plus haut possible pour que le zéro d'étalonnage de l'appareil 52 soit aussi proche que possible du zéro vrai. Il ne doit cependant pas émerger afin de demeurer dans des conditions d'environnement stables. Son emplacement sous le flotteur 20 procure donc des avantages spécifiques tant du point de vue stabilité de l'ensemble que du point de vue qualité des mesures.

Les ensembles 30 et 50 doivent être placés de part et d'autre du centre de poussée afin qu'ils concourent à l'équilibrage du dispositif vis-à-vis des effets d'un courant horizontal. Les emplacements décrits plus hauts sont donc cohérents aussi à cet égard.

Pour éviter le "pilonnement" d'une manière aussi parfaite que possible, il faut que le dispositif soit tout à fait symétrique par rapport au centre de poussée pour que les mouvements du milieu à étudier aient les mêmes effets en haut et en bas de la perche 10. Mais bien entendu, par construction, il faut que la perche 10 soit verticale et pour cela il lui faut un lest inférieur.

Par conséquent, on ne peut pas prévoir dans la partie basse de la perche la reproduction du flotteur 20 comme le préconise le document FR-A-2.041.708. Selon l'invention, le lest 30 est surmonté d'un corps creux 12 équivalent en superficie extérieure à la partie immergée 22 du flotteur 20 et à l'ensemble 50. Ce corps creux 12 est percé de trous latéraux 13 pour que l'eau puisse pénétrer librement à l'intérieur et ainsi former lest et évite tout effet de flotteur. Ce corps creux 12 constitue par conséquent une surface d'équilibrage hydrodynamique.

Pour accroître la stabilité verticale du dispositif au sein du milieu à étudier A, la perche 10 reçoit deux stabilisateurs 60 superposés, c'est-à-dire de même orientation et placés symétriquement, de part et d'autre du centre de poussée $z$. Ils comprennent chacun une bague de support 61 assujettie à la perche 10, un aileron 62 situé dans un plan perpendiculaire à l'axe de la perche 10 et un raidissage de consolidation 63. La bague 61 est avantageusement desolidarisable de la parche 10 pour permettre de régler la position exacte de chaque stabilisateur 60 le long de la perche 10.

Deux organes 70 sont fixés à la perche 10 symétriquement, de part et d'autre du centre de poussée $z$, en étant diamétralement opposés aux stabilisateurs 60. Ils doivent recevoir des éléments flexibles 71 et 72 tels que des filins reliés à un autre filin 73 aboutissant à un ensemble immergé 80 ayant une flottabilité neutre pour demeurer sensiblement à un niveau constant auquel le filin 73 est horizontal afin de ne perturber en rien la position, la stabilité et les mouvements du dispositif. L'ensemble 80 comprend un ballon 81 amarré par un câble et/ou une chaîne 82 à un corps mort d'ancrage 83 posé sur le fond solide B du milieu à étudier A.

Les câbles 40 et 42 correspondent à des prolongateurs 43 qui sont assujettis de manière étanche au connecteur 41 et qui, après un bouclage de sécurité anti-traction 44 courent le long d'un ou des deux éléments flexibles 71-72, puis du filin 73 jusqu'à l'ensemble immergé 80. Si le dispositif est mouillé à proximité de la côte, les prolongateurs 43 aboutissent à une boîte de raccordement (non représentée) faisant partie de l'ensemble immergé 80 pour être reliés à un câble électrique 45 posé sur le fond B et aboutissant à une station d'enregistrement et/ou d'nalyse des informations fournies par les appareils de mesure 32 et 52. Si le dispositif est mouillé loin de la côte, les prolongateurs 43 sont connectés à une installation d'émission radio 90 placée dans une bouée 91 et comprenant une antenne fouet 92. La bouée 91 flotte alors que l'ensemble 80 reste immergé, de sorte qu'elle doit être reliée à l'ensemble 80 par un filin 74 de longueur suffisante pour permettre à la bouée 91 de flotter sur les plus hautes lames prévisibles alors que l'ensemble 80 reste toujours immergé, à un hauteur constante par rapport au fond B. On peut, par exemple, donner au filin 74 une longueur de vingt mètres. Les prolongateurs 43 aboutissent à une boîte de raccordement (non représentée) faisant partie de l'ensemble immergé 80 pour être reliés à un câble électrique 46 qui court le long du filin 74 jusqu'à la bouée 91 dans laquelle il est raccordé par tout moyen connu à la station d'émission radio 90. Le filin 73 est avantageusement flottant et peut être constitué par un câble multi-conducteurs formant les prolongateurs des câbles 40 et 42. Le filin 74 peut lui aussi être constitué par un câble multi-conducteurs.

Le fonctionnement du dispositif qui vient d'être décrit est le suivant :

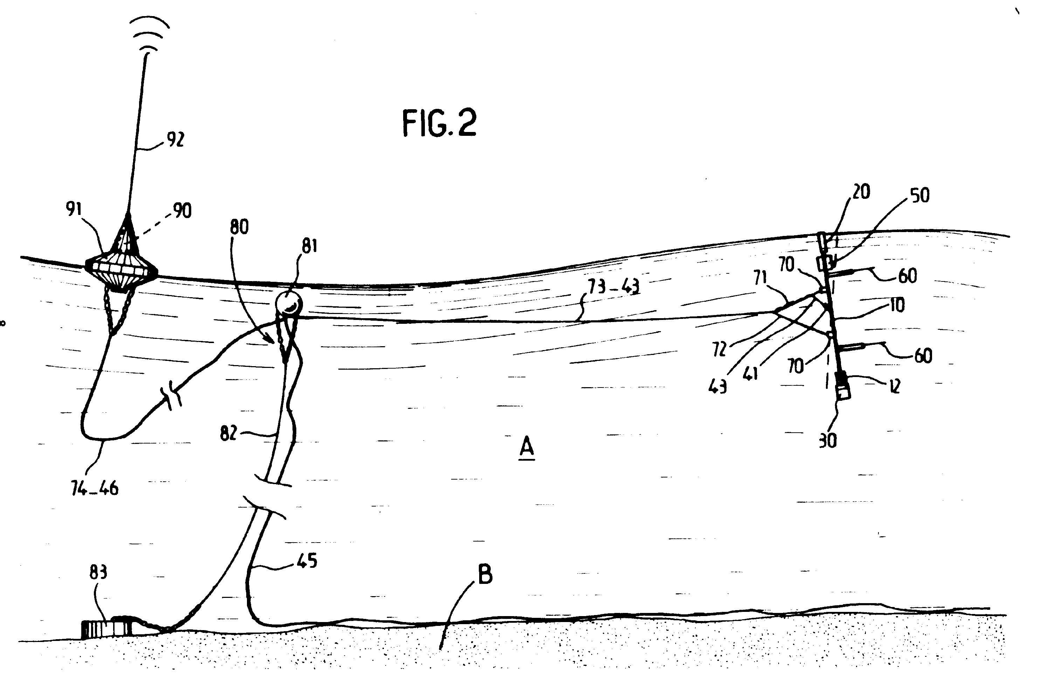

L'ensemble est mouillé comme cela est représenté sur la figure 2. On a réglé l'immersion du dispositif comme on l'expliquera plus loin. Seule la partie 21 du flotteur 20 émerge quand la mer est calme. Les appareils 32 et 52 sont alimentés en énergie électrique, soit par des batteries ou piles intégrées au dispositif, soit par des batteries ou piles placées dans l'ensemble immergé 80 ou dans la bouée 91 et alimentant les appareils 32 et 52 par des fils des câbles 40 et 42.

Lorsque la houle se forme, l'onde atteint le flotteur 20 et le submerge puisque le dispositif a une flottabilité neutre et, en outre, ne "pilonne" pas. L'appareil 52 subit une pression croissante jusqu'à un maximum puis décroit. Il envoie des signaux électriques corrélatifs qui sont conduits par les câbles 42 à l'émetteur 90 qui les envoie par l'antenne 92 à une station d'analyse, ou directement à cette station par le câble 45. Ces signaux peuvent, par exemple, être transcodés et traduits en courbes apparaissant sur un enregistreur à stylet. On apprend ainsi quelle est l'amplitude de la houle.

Dès que la crête de la houle a dépassé le dispositif, les mouvements trochoïdaux des molécules d'eau ont pour effet de faire basculer la perche 10 dont le flotteur 20 s'incline vers l'arrière de la houle car ici, contrairement aux filets d'eau parallèles d'un courant, les molécules d'eau sont animées de mouvements courbes qui créent un couple de basculement.

L'appareil 32 détecte ce basculement et, en précise l'azimuth, comme cela a été décrit dans le document FR-A-2-041-708.

Les signaux sont transmis de la même manière que ceux de l'appareil 52.

Cet ensemble, réunissant les appareils 32 et 52 constitue donc ce que l'on pourrait appeler un goniohoulographe puisqu'il donne la direction de la houle, sa fréquence et son amplitude à une période de temps également fournie par le dispositif. On dispose ainsi de toutes les informations nécessaires à une connaissance correcte du site étudié.

Pour ajuster aussi exactement que possible l'équilibrage du dispositif, il faut pouvoir lui ajouter un lest avantageusement fluide. Pour cela, on agit de la manière suivante :

Quand le dispositif est en ordre de marche, on le place dans le milieu à étudier calme et si la partie émergée 21 est considérée comme trop importante, on utilise un petit récipient très léger, comme un gobelet en plastique, et on le pose sur le sommet du flotteur 20. On y déverse doucement un lest fluide comme, par exemple, de la grenaille de plomb, jusqu'à que le dispositif se soit enfoncé et que la partie émergée 21 ait la hauteur désirée. A ce moment, on dispose de la quantité de lest exactement mesurée car le gobelet a un poids négligeable. On doit alors introduire ce lest dans le dispositif qui est muni d'un logement étanche et d'un orifice obturable.

Ici, on illustre cette disposition en prévoyant que la perche 10 est formée de deux tronçons désolidarisables. On voit en effet sur la figure 2 que la partie supérieure 14 de la perche 10 a une extrémité inférieure munie d'un épaulement 15 au-dessus duquel se trouve une bague libre 16. La partie inférieure 17 de la perche 10 se termine en tulipe 18 filetée extérieurement. Un joint d'étanchéité 19 est interposé entre l'extrémité inférieure de la partie 14 et le fond de la tulipe 18.

Quand on dispose de la quantité de lest d'équilibrage voulu, on retire le dispositif de l'eau, on dévisse la bague 16, on sépare ainsi les parties 14 et 17 et l'on a accès à l'intérieur creux de la partie inférieure 17 de la perche 10. On y déverse le lest fluide qui tombe aussi bas que possible, ici la partie haute vide 36$\underline{a}$ de la cloche 36. Si ce logement 36$\underline{a}$ est trop petit pour contenir tout le lest fluide introduit, celui-ci le remplit complètement et son niveau supérieur se situe dans le fond de la partie 17 de la perche 10. De toutes façons, ce lest se trouve à la partie inférieure du dispositif.

Quand on a vidé tout le lest, on replace la partie 14 sur la partie 17 et l'on revisse la bague 16 qui se visse sur le filetage de la tulipe 18 et applique l'épaulement 15 sur le joint d'étanchéité 19.

On remarque que pour des raisons de robustesse et de sécurité, l'un des organes d'attache 70 est situé sur la partie 14 et l'autre sur la partie 17.

**Revendications**

1. Dispositif pour l'étude et/ou la mesure de phénomènes hydrauliques en milieu non stable, notamment marin, du type comprenant une perche (10) devant être plongée dans le milieu à étudier (A) et munie d'une part d'un flotteur supérieur (20) dont un partie (22) doit rester immergée quel que soit l'état d'agitation du milieu (A) et d'autre part d'un lest inférieur (30), perche qui est reliée à des moyens d'ancrage (80-81-82-83) par un élément flexible tel qu'un câble (73), caractérisé en ce que sous le flotteur supérieur (20) se trouve un ensemble (50) qui comprend un boîtier extérieur (51) de même forme et dimensions que la perche (10) elle-même et un appareil de mesure intérieur (52), le tube (51) étant percé de trous (55) pour permettre à l'eau du milieu à étudier (A) de parvenir jusqu'à l'appareil (52), le lest (30) est surmonté d'un corps creux (12) qui est équivalent en superficie extérieure à la partie (22) du flotteur (20) devant rester immergée et à l'ensemble (50), le corps creux (12) étant percé de trous (13), la perche (10) recevant au moins deux stabilisateurs latéraux (60) superposés et situés de part et d'autre du centre de poussée (z) du dispositif, l'ensemble (50) étant prévu à un niveau où il reste immergé quel que soit le degré d'agitation du milieu étudié (A).

2. Dispositif selon la revendication 1, caractérisé en ce que chaque stabilisateur (60) comprend au moins un aileron (61) situé dans un plan perpendiculaire à l'axe de la perche (10).

3. Dispositif selon la revendication 1, caractérisé en ce que la perche (10) comprend deux organes d'accrochage (70) situés de part et d'autre du centre de poussée (z) du dispositif et diamétralement opposés aux stabilisateurs (60), chacun de ces organes (70) étant destiné à recevoir un élément flexible (71-72) pour sa liaison avec des moyens d'ancrage (73-80-81-82-83).

4. Dispositif selon la revendication 1, caractérisé en ce que le lest est constitué par au moins un appareil de mesure (32) placé dans un boîtier (31).

5. Dispositif selon la revendication 1, caractérisé en ce qu'il comporte un logement étanche (36a) muni d'un orifice obturable par lequel on peut introduire un lest fluide destiné à ajuster le niveau de flottaison du dispositif.

**Patentansprüche**

1. Vorrichtung zur Untersuchung und/oder Messung hydraulischer Erscheinungen im unstabilen Milieu, insbesondere im Meer, umfassend einen Stab (10), der in das zu untersuchende Milieu (A) eingetaucht wird und der einerseits mit einem obenliegenden Schwimmer (20), wovon ein Teil (22) unabhängig vom Bewegungszustand des Milieus (A) eingetaucht bleiben muss, andererseits mit einem untenliegenden Ballast (30) ausgestattet ist, wobei der Stab durch ein flexibles Element, beispielsweise ein Kabel (73), mit Verankerungen (80, 81, 82, 83) verbunden ist, dadurch gekennzeichnet, dass sich unter dem obenliegenden Schwimmer (20) ein Aggregat (50), das ein Mantelrohr (51) von der gleichen Form und den gleichen Abmessungen wie der Stab (10) umfasst, und ein inneres Messgerät (52) befinden, wobei das Rohr (51) mit Löchern (55) versehen ist, so dass das Wasser des zu untersuchenden Milieus (A) bis zum Messgerät (52) gelangen kann, und dass über dem Ballast (30) ein Hohlkörper (12) angeordnet ist, dessen Aussenfläche dem Teil (22) des Schwimmers (20), der eingetaucht bleiben muss, sowie dem Aggregat (50) entspricht, und der Hohlkörper (12) mit Löchern (13) versehen ist, während der Stab (10) mit mindestens zwei übereinanderliegenden, auf beiden Seiten des Druckzentrums (z) der Vorrichtung angeordneten seitlichen Stabilisatoren (60) ausgestattet ist, wobei das Aggregat (50) höhenmässig so vorgesehen ist, dass es unabhängig vom Bewegungsgrad des untersuchten Milieus (A) eingetaucht bleibt.

2. Vorrichtung gemäss Anspruch 1, dadurch gekennzeichnet, dass jeder Stabilisator (60) mindestens einen Flügel (61) umfasst, der in einer Ebene senkrecht zur Achse des Stabs (10) angeordnet ist.

3. Vorrichtung gemäss Anspruch 1, dadurch gekennzeichnet, dass der Stab (10) zwei Anschlussorgane (70) umfasst, die beiderseits des Druckzentrums (z) der Vorrichtung und den Stabilisatoren (60) diametral entgegengesetzt angeordnet sind, wobei jedes dieser Organe (70) dazu bestimmt ist, ein flexibles Element (71, 72) aufzunehmen, das der Verbindung mit den Verankerungen (73, 80, 81, 82, 83) dient.

4. Vorrichtung gemäss Anspruch 1, dadurch gekennzeichnet, dass der Ballast aus mindestens einem in einem Gehäuse (31) untergebrachten Messgerät (32.) besteht.

5. Vorrichtung gemäss Anspruch 1, dadurch gekennzeichnet, dass sie eine dicht abschliessende Rammer (36a) umfasst, die mit einer verschliessbaren Öffnung versehen ist, durch die flüssiger Ballast eingeführt werden kann, der dazu dient, das Schwimmniveau der Vorrichtung einzustellen.

**Claims**

1. Device for studying and/or measuring hydraulic phenomena in an unstable medium, notably the sea, typically comprising a pole (10) designed to be immersed in the medium under study (A) and fitted at its upper end with a float (20) of which a portion (22) must remain immersed, irrespective of conditions at the surface of the medium (A), and at the lower end with ballast (30), the pole is attached to anchoring means (80-81-82-83) by a flexible element, such as a cable (73), characterized in that under the upper float (20) is an assembly (50) which comprises an external casing (51) of same shape and size than those of the pole (10) itself and an internal measuring apparatus (52), the tube (51) being perforated with holes (55) to allow the water of the medium (A) to be studied to reach the apparatus (52), the ballast (30) being surmounted by an hollow body (12), the surface area of which is equivalent to that of the portion (22) of the float (20) which have to remain immersed and to the assembly (50), the hollow body (12) being perforated with holes (13), the pole (10) being equipped with at least two lateral stabilisers (60) installed one above the other and on either side of the centre of pressure ($\underline{z}$) of the device, the assembly (50) being placed at a level such it remains immersed whatever the turbulence in the medium studied (A).

2. Device according claim 1, <u>characterised in that</u> each stabiliser (60) equipped with at least one fin (61) mounted normal to the axis of the pole 10.

3. Device according claim 1, <u>characterized in that</u> the pole (10) comprises two lugs (70) mounted on either side of the centre of pressure ($\underline{z}$) of the device and diametrically opposed to the stabilisers (60), each of these lugs (70) being designed to receive a flexible element (71-72) for its connection to the anchoring means (73-80-81-82-83).

4. Device according claim 1, <u>characterized in that</u> the ballast consists in at least one measuring apparatus (32) installed in a casing (31).

5. Device according claim 1, <u>characterized in that</u> a waterlight chamber (36$\underline{a}$) fitted with a seal orifice into which fluid ballast may be introduced in order to adjust the flotation level of the device.

FIG. 1

FIG.2